(19) Europäisches Patentamt
European Patent Office
Office européen des brevets

(11) EP 3 330 343 A1

(12) EUROPEAN PATENT APPLICATION
published in accordance with Art. 153(4) EPC

(43) Date of publication:
**06.06.2018 Bulletin 2018/23**

(21) Application number: **16830479.8**

(22) Date of filing: **25.07.2016**

(51) Int Cl.:
***C09K 15/32*** *(2006.01)* ***C08K 5/524*** *(2006.01)*
***C08L 101/00*** *(2006.01)*

(86) International application number:
**PCT/JP2016/071710**

(87) International publication number:
**WO 2017/018374 (02.02.2017 Gazette 2017/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.07.2015 JP 2015150083**

(71) Applicant: **Sumitomo Chemical Company, Ltd.**
**Chuo-ku**
**Tokyo 104-8260 (JP)**

(72) Inventor: **KIMURA, Natsuko**
**Osaka-shi**
**Osaka 554-8558 (JP)**

(74) Representative: **Vossius & Partner**
**Patentanwälte Rechtsanwälte mbB**
**Siebertstrasse 3**
**81675 München (DE)**

(54) **PHOSPHITE ESTER COMPOSITION**

(57) The present invention provides a composition containing a compound represented by the formula (1) and a mixture containing at least two kinds of compounds represented by the formula (2)

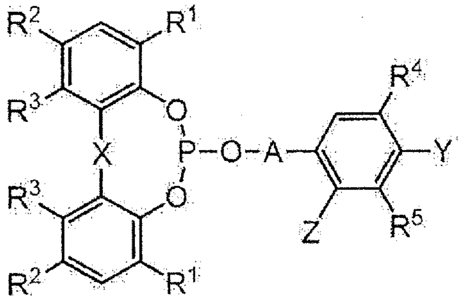
(1)

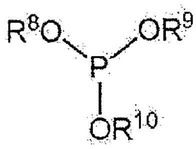
(2)

wherein the definitions of the groups in the formulas (1) and (2) are as described in the DESCRIPTION.

EP 3 330 343 A1

## Description

[Technical Field]

The present invention relates to a phosphite composition useful as a stabilizer for organic materials.

[Background Art]

Organic materials such as thermoplastic resin, rubber and the like are degraded by the action of heat, oxygen and the like during processing into products and during use after processing. To improve stability during processing (processing stability) and stability during use, stabilizers are often added to organic materials. As such stabilizer, for example, phosphorus antioxidants such as tris(2,4-di-t-butylphenyl)phosphite and the like, phenolic antioxidants such as octadecyl 3-(3,5-di-t-butyl-4-hydroxyphenyl)propanoate and the like, the phosphite described in patent document 1 and the like are known.

[Document List]

[Patent document]

patent document 1: JP-A-10-273494

[SUMMARY OF THE INVENTION]

[Problems to be Solved by the Invention]

While stabilizers are useful for improving stability (particularly, processing stability) of organic materials, organic material compositions containing a stabilizer sometimes have lower transparency as compared to that of organic materials alone. The present invention has been predicated on such situation, and aims to provide a stabilizer capable of suppressing a decrease in the transparency of organic material compositions as compared to conventional stabilizers.

[Means of Solving the Problems]

The present inventor has conducted intensive studies in an attempt to achieve the aforementioned object and found that the above-mentioned object can be achieved by using particular phosphites in combination. The present invention based on this finding is as described below.

[1] A composition comprising a compound represented by the formula (1):

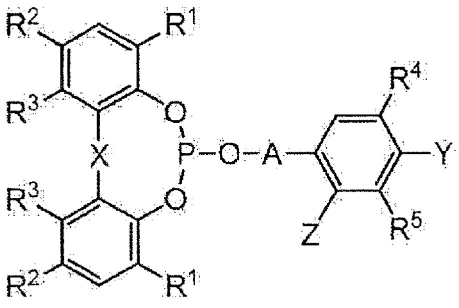

(1)

in the formula (1),

$R^1$, $R^2$, $R^4$ and $R^5$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a $C_{6-14}$ aryl group,
$R^3$ is a hydrogen atom or a $C_{1-8}$ alkyl group,
X is a single bond, a sulfur atom or a -$CHR^6$- group wherein $R^6$ is a hydrogen atom, a $C_{1-8}$ alkyl group or a $C_{5-8}$ cycloalkyl group,
A is a $C_{2-8}$ alkylene group or a *-$COR^7$- group wherein $R^7$ is a single bond or a $C_{1-8}$ alkylene group, and * shows binding to the oxygen atom side, and

one of Y and Z is a hydroxy group, a $C_{1-8}$ alkoxy group or a $C_{7-12}$ aralkyloxy group and the other is a hydrogen atom or a $C_{1-8}$ alkyl group, and

a mixture of at least two kinds of compounds represented by the formula (2):

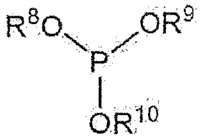

(2)

in the formula (2), $R^8$ - $R^{10}$ are each independently a $C_{6-18}$ aryl group substituted by at least one $C_{1-18}$ alkyl group.

[2] The composition of the aforementioned [1] wherein $R^8$ - $R^{10}$ are each independently a group represented by the formula (3):

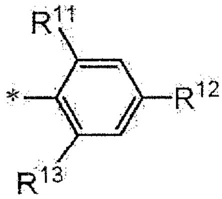

(3)

in the formula (3),

$R^{11}$ - $R^{13}$ are each independently a hydrogen atom or a $C_{1-6}$ alkyl group, provided that at least one of $R^{11}$ - $R^{13}$ is not a hydrogen atom, and

* shows binding to the oxygen atom side.

[3] The composition of the aforementioned [1] wherein the mixture comprises at least two kinds selected from the group consisting of compounds represented by any of the formula (2a) - the formula (2d):

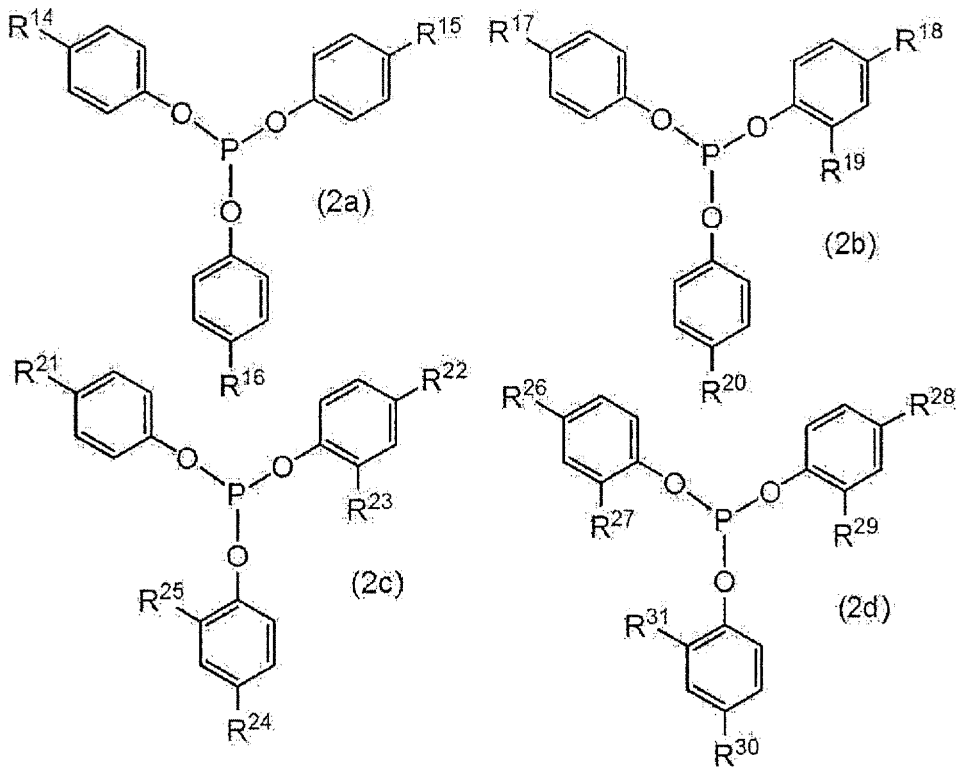

(2a) (2b) (2c) (2d)

in the formula (2a) - the formula (2d), $R^{14}$ - $R^{31}$ are each independently a t-butyl group or a t-pentyl group.

[4] The composition of the aforementioned [3] wherein a proportion of the compound represented by the formula (2a) to the mixture is 15 - 70 area%, that of the compound represented by the formula (2b) is 10 - 60 area%, that of the compound represented by the formula (2c) is 0 - 30 area%, and that of the compound represented by the formula (2d) is 0 - 5 area% by liquid chromatography analysis under the conditions described in the following Examples.

[5] The composition of the aforementioned [3] wherein a proportion of the compound represented by the formula (2a) to the mixture is 20 - 65 area%, that of the compound represented by the formula (2b) is 20 - 50 area%, that of the compound represented by the formula (2c) is 2 - 20 area%, and that of the compound represented by the formula (2d) is 0 - 1 area% by liquid chromatography analysis under the conditions described in the following Examples.

[6] The composition of the aforementioned [1] wherein the mixture comprises at least two selected from the group consisting of tris(4-t-pentylphenyl)phosphite, bis(4-t-pentylphenyl)-2,4-di-t-pentylphenylphosphite, bis(2,4-di-t-pentylphenyl)-4-t-pentylphenylphosphite and tris(2,4-di-t-pentylphenyl)phosphite, or at least two selected from the group consisting of tris(4-t-butylphenyl)phosphite, bis(4-t-butylphenyl)-2,4-di-t-butylphenylphosphite, bis(2,4-di-t-butylphenyl)-4-t-butylphenylphosphite and tris(2,4-di-t-butylphenyl)phosphite.

[7] The composition of the aforementioned [1] wherein the mixture comprises tris(4-t-pentylphenyl)phosphite, bis(4-t-pentylphenyl)-2,4-di-t-pentylphenylphosphite and bis(2,4-di-t-pentylphenyl)-4-t-pentylphenylphosphite.

[8] The composition of the aforementioned [7] wherein a proportion of tris(4-t-pentylphenyl)phosphite to the mixture is 15 - 70 area%, that of bis(4-t-pentylphenyl)-2,4-di-t-pentylphenylphosphite is 10 - 60 area%, and that of bis(2,4-dit-pentylphenyl)-4-t-pentylphenylphosphite is 0 - 30 area% by liquid chromatography analysis under the conditions described in the following Examples.

[9] The composition of the aforementioned [7] wherein a proportion of tris(4-t-pentylphenyl)phosphite to the mixture is 20 - 65 area%, that of bis(4-t-pentylphenyl)-2,4-di-t-pentylphenylphosphite is 20 - 50 area%, and that of bis(2,4-dit-pentylphenyl)-4-t-pentylphenylphosphite is 2 - 20 area% by liquid chromatography analysis under the conditions described in the following Examples.

[10] The composition of any one of the aforementioned [1] to [9] wherein $R^1$ and $R^4$ are each independently a $C_{1-8}$ alkyl group, a $C_{5-8}$ cycloalkyl group or a $C_{6-12}$ alkylcycloalkyl group.

[11] The composition of any one of the aforementioned [1] to [9] wherein $R^1$ and $R^4$ are each independently a $C_{4-8}$ alkyl group having a tertiary carbon atom, a cyclohexyl group or a 1-methylcyclohexyl group.

[12] The composition of any one of the aforementioned [1] to [9] wherein $R^1$ and $R^4$ are each independently a t-butyl group, a t-pentyl group or a t-octyl group.

[13] The composition of any one of the aforementioned [1] to [9] wherein $R^1$ and $R^4$ are t-butyl groups.

[14] The composition of any one of the aforementioned [1] to [13] wherein $R^2$ is a $C_{1-8}$ alkyl group, a $C_{5-8}$ cycloalkyl group or a $C_{6-12}$ alkylcycloalkyl group.

[15] The composition of any one of the aforementioned [1] to [13] wherein $R^2$ is a $C_{1-5}$ alkyl group.

[16] The composition of any one of the aforementioned [1] to [13] wherein $R^2$ is a methyl group, a t-butyl group or a t-pentyl group.

[17] The composition of any one of the aforementioned [1] to [13] wherein $R^2$ is a t-butyl group.

[18] The composition of any one of the aforementioned [1] to [17] wherein $R^5$ is a hydrogen atom, a $C_{1-8}$ alkyl group or a $C_{5-8}$ cycloalkyl group.

[19] The composition of any one of the aforementioned [1] to [17] wherein $R^5$ is a hydrogen atom or a $C_{1-5}$ alkyl group.

[20] The composition of any one of the aforementioned [1] to [17] wherein $R^5$ is a hydrogen atom or a methyl group.

[21] The composition of any one of the aforementioned [1] to [17] wherein $R^5$ is a methyl group.

[22] The composition of any one of the aforementioned [1] to [21] wherein $R^3$ is a hydrogen atom or a $C_{1-5}$ alkyl group.

[23] The composition of any one of the aforementioned [1] to [21] wherein $R^3$ is a hydrogen atom or a methyl group.

[24] The composition of any one of the aforementioned [1] to [21] wherein $R^3$ is a hydrogen atom.

[25] The composition of any one of the aforementioned [1] to [24] wherein X is a single bond or a $-CHR^6-$ group wherein $R^6$ is a hydrogen atom or a $C_{1-8}$ alkyl group.

[26] The composition of any one of the aforementioned [1] to [24] wherein X is a single bond.

[27] The composition of any one of the aforementioned [1] to [26] wherein A is a $C_{2-8}$ alkylene group, a carbonyl group or $*-CO-(CH_2)_2-$ wherein * shows binding to the oxygen atom side.

[28] The composition of any one of the aforementioned [1] to [26] wherein A is a $C_{2-8}$ alkylene group.

[29] The composition of any one of the aforementioned [1] to [26] wherein A is a trimethylene group.

[30] The composition of any one of the aforementioned [1] to [29] wherein one of Y and Z is a hydroxy group and the other is a hydrogen atom.

[31] The composition of any one of the aforementioned [1] to [29] wherein Y is a hydroxy group and Z is a hydrogen atom.

[32] The composition of any one of the aforementioned [1] to [9] wherein $R^1$, $R^2$ and $R^4$ are each independently a $C_{1-8}$ alkyl group, a $C_{5-8}$ cycloalkyl group or a $C_{6-12}$ alkylcycloalkyl group, $R^5$ is a hydrogen atom, a $C_{1-8}$ alkyl group or a $C_{5-8}$ cycloalkyl group, $R^3$ is a hydrogen atom or a $C_{1-5}$ alkyl group, X is a single bond or a -CHR$^6$- group wherein $R^6$ is a hydrogen atom or a $C_{1-8}$ alkyl group, A is a $C_{2-8}$ alkylene group, a carbonyl group or *-CO-$(CH_2)_2$- wherein * shows binding to the oxygen atom side, and one of Y and Z is a hydroxy group and the other is a hydrogen atom.
[33] The composition of any one of the aforementioned [1] to [9] wherein $R^1$ and $R^4$ are each independently a $C_{4-8}$ alkyl group having a tertiary carbon atom, a cyclohexyl group or a 1-methylcyclohexyl group, $R^2$ is a $C_{1-5}$ alkyl group, $R^5$ is a hydrogen atom or a $C_{1-5}$ alkyl group, $R^3$ is a hydrogen atom or a methyl group, X is a single bond, A is a $C_{2-8}$ alkylene group, Y is a hydroxy group, and Z is a hydrogen atom.
[34] The composition of any one of the aforementioned [1] to [9] wherein $R^1$ and $R^4$ are each independently a t-butyl group, a t-pentyl group or a t-octyl group, $R^2$ is a methyl group, a t-butyl group or a t-pentyl group, $R^5$ is a hydrogen atom or a methyl group, $R^3$ is a hydrogen atom, X is a single bond, A is a trimethylene group, Y is a hydroxy group, and Z is a hydrogen atom.
[35] The composition of any one of the aforementioned [1] to [9] wherein the compound represented by the formula (1) is 6-[3-(3-t-butyl-4-hydroxy-5-methylphenyl)propoxy]-2,4,8,10-tetra-t-butyldibenzo[d,f][1,3,2] dioxaphosphepin.
[36] The composition of any one of the aforementioned [1] to [35] wherein a proportion of the compound represented by the formula (1) to the total of the compound represented by the formula (1) and the mixture containing at least two kinds of compounds represented by the formula (2) is 5 - 95 wt%.
[37] The composition of any one of the aforementioned [1] to [35] wherein a proportion of the compound represented by the formula (1) to the total of the compound represented by the formula (1) and the mixture containing at least two kinds of compounds represented by the formula (2) is 7 - 80 wt%.
[38] The composition of any one of the aforementioned [1] to [35] wherein a proportion of the compound represented by the formula (1) to the total of the compound represented by the formula (1) and the mixture containing at least two kinds of compounds represented by the formula (2) is 8 - 25 wt% or 50 - 80 wt%.
[39] The composition of any one of the aforementioned [1] to [35] wherein a proportion of the compound represented by the formula (1) to the total of the compound represented by the formula (1) and the mixture containing at least two kinds of compounds represented by the formula (2) is 50 - 80 wt%.
[40] The composition of any one of the aforementioned [1] to [35] wherein a proportion of the compound represented by the formula (1) to the total of the compound represented by the formula (1) and the mixture containing at least two kinds of compounds represented by the formula (2) is 5 - 40 wt%.
[41] The composition of any one of the aforementioned [1] to [35] wherein a proportion of the compound represented by the formula (1) to the total of the compound represented by the formula (1) and the mixture containing at least two kinds of compounds represented by the formula (2) is 7 - 30 wt%.
[42] The composition of any one of the aforementioned [1] to [35] wherein a proportion of the compound represented by the formula (1) to the total of the compound represented by the formula (1) and the mixture containing at least two kinds of compounds represented by the formula (2) is 10 - 25 wt%.
[43] A stabilizer for an organic material, the stabilizer comprising the composition of any one of the aforementioned [1] to [42].
[44] The stabilizer of the aforementioned [43], wherein the organic material is a thermoplastic resin.
[45] The stabilizer of the aforementioned [44], wherein the thermoplastic resin is a polyolefin or an engineering resin.
[46] The stabilizer of the aforementioned [44], wherein the thermoplastic resin is a polyethylene.
[47] The stabilizer of the aforementioned [44], wherein the thermoplastic resin is a linear low-density polyethylene.
[48] A method of stabilizing an organic material, the method comprising adding the composition of any one of the aforementioned [1] to [42] to the organic material.
[49] The method of the aforementioned [48], wherein the organic material is a thermoplastic resin.
[50] The method of the aforementioned [49], wherein the thermoplastic resin is a polyolefin or an engineering resin.
[51] The method of the aforementioned [49], wherein the thermoplastic resin is a polyethylene.
[52] The method of the aforementioned [49] wherein the thermoplastic resin is a linear low-density polyethylene.
[53] The method of any one of the aforementioned [48] to [52] wherein a total amount of the compound represented by the formula (1) and the mixture containing at least two kinds of compounds represented by the formula (2) is 0.01 - 5 parts by weight per 100 parts by weight of the organic material.
[54] The method of any one of the aforementioned [48] to [52] wherein a total amount of the compound represented by the formula (1) and the mixture containing at least two kinds of compounds represented by the formula (2) is 0.03 - 3 parts by weight per 100 parts by weight of the organic material.
[55] The method of any one of the aforementioned [48] to [52] wherein a total amount of the compound represented by the formula (1) and the mixture containing at least two kinds of compounds represented by the formula (2) is 0.05 - 1 part by weight per 100 parts by weight of the organic material.
[56] A stabilized organic material composition comprising an organic material and the composition of any one of the

aforementioned [1] to [42].

[57] The composition of the aforementioned [56], wherein the organic material is a thermoplastic resin.

[58] The composition of the aforementioned [57], wherein the thermoplastic resin is a polyolefin or an engineering resin.

[59] The composition of the aforementioned [57], wherein the thermoplastic resin is a polyethylene.

[60] The composition of the aforementioned [57] wherein the thermoplastic resin is a linear low-density polyethylene.

[61] The composition of any one of the aforementioned [56] to [60] wherein a total amount of the compound represented by the formula (1) and the mixture containing at least two kinds of compounds represented by the formula (2) is 0.01 - 5 parts by weight per 100 parts by weight of the organic material.

[62] The composition of any one of the aforementioned [56] to [60] wherein a total of the compound represented by the formula (1) and the mixture containing at least two kinds of compounds represented by the formula (2) is 0.03 - 3 parts by weight per 100 parts by weight of the organic material.

[63] The composition of any one of the aforementioned [56] to [60] wherein a total of the compound represented by the formula (1) and a mixture containing at least two kinds of compounds represented by the formula (2) is 0.05 - 1 part by weight per 100 parts by weight of the organic material.

[Effect of the Invention]

According to the present invention that uses a particular phosphite in combination, a decrease in the transparency of an organic material composition can be suppressed as compared to the use of conventional stabilizers.

[Description of Embodiments]

The present invention provides a composition comprising a compound represented by the formula (1) and a mixture containing at least two kinds of compounds represented by the formula (2).

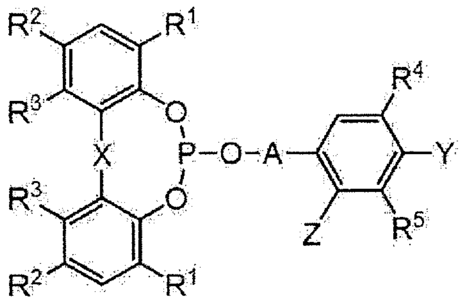

(1)

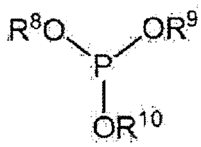

(2)

In the following, "a compound represented by the formula (1)" is sometimes to be abbreviated as "compound (1)". Compounds represented by other formulas are sometimes to be abbreviated in the same manner. In addition, the "composition comprising compound (1) and a mixture containing at least two kinds of compounds (2)" is sometimes to be abbreviated as "the phosphite composition of the present invention".

<Definition of groups>

In the present specification, the "$C_{x-y}$" means that the number of carbon atoms is not less than x and not more than y (x, y: integers).

In the present specification, the "alkyl group" encompasses both a linear alkyl group and a branched chain alkyl group. In the present specification, examples of the "$C_{1-18}$ alkyl group" include methyl group, ethyl group, propyl group, isopropyl group, butyl group, isobutyl group, sec-butyl group, t-butyl group, pentyl group, isopentyl group, neopentyl group, t-pentyl group, hexyl group, heptyl group, octyl group, isooctyl group (alias: 6-methylheptyl group), t-octyl group (alias: 1,1,3,3-tetramethylbutyl group), 2-ethylhexyl group, nonyl group, decyl group, undecyl group, dodecyl group, tridecyl group, tetradecyl group, pentadecyl group, hexadecyl group, heptadecyl group, octadecyl group. Examples of the "$C_{1-5}$ alkyl group", "$C_{1-6}$ alkyl group", "$C_{1-8}$ alkyl group" and "$C_{4-8}$ alkyl group" respectively include the aforementioned examples having a carbon atom number of 1 - 5, 1 - 6, 1 - 8 and 4 - 8.

In the present specification, the "alkoxy group" encompasses both a linear alkoxy group and a branched chain alkoxy group. In the present specification, examples of the "$C_{1-8}$ alkoxy group" include methoxy group, ethoxy group, propoxy group, isopropoxy group, butoxy group, isobutoxy group, sec-butoxy group, t-butoxy group, t-pentyloxy group, isooctyloxy group (alias: 6-methylheptyloxy group), t-octyloxy group (alias: 1,1,3,3-tetramethylbutyloxy group), 2-ethylhexyloxy group.

In the present specification, examples of the "$C_{5-8}$ cycloalkyl group" include cyclopentyl group, cyclohexyl group, cycloheptyl group, cyclooctyl group.

In the present specification, examples of the "$C_{6-12}$ alkylcycloalkyl group" include 1-methylcyclopentyl group, 2-methylcyclopentyl group, 1-methylcyclohexyl group, 2-methylcyclohexyl group, 1-methyl-4-isopropylcyclohexyl group.

In the present specification, examples of the "$C_{7-12}$ aralkyl group" include benzyl group, α-methylbenzyl group (alias: 1-phenylethyl group), α,α-dimethylbenzyl group (alias: 1-methyl-1-phenylethyl group or cumyl group) and the like.

In the present specification, examples of the "$C_{7-12}$ aralkyloxy group" include benzyloxy group, α-methylbenzyloxy group, α,α-dimethylbenzyloxy group.

In the present specification, the "alkylene group" encompasses both a linear alkylene group and a branched chain alkylene group. In the present specification, examples of the "$C_{1-8}$ alkylene group" include methylene group, ethylene group, propylene group ($-CH(CH_3)CH_2-$, $-CH_2CH(CH_3)-$), trimethylene group, tetramethylene group, pentamethylene group, hexamethylene group, octamethylene group, 2,2-dimethyl-1,3-propylene group. Examples of the "$C_{2-8}$ alkylene group" include the aforementioned examples having a carbon atom number of 2 - 8.

In the present specification, examples of the "$C_{6-18}$ aryl group" include phenyl group, naphthyl group, phenanthryl group, anthryl group, biphenylyl group, terphenyl group. Examples of the "$C_{6-14}$ aryl group" include the aforementioned examples having a carbon atom number of 6 - 14.

<Compound (1)>

Only one kind of compound (1) may be used or two or more kinds thereof may be used in combination. The groups that compound (1) has are successively explained below.

In the formula (1), $R^1$, $R^2$, $R^4$ and $R^5$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a $C_{6-14}$ aryl group, and preferably a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group.

$R^1$ and $R^4$ are more preferably each independently a $C_{1-8}$ alkyl group, a $C_{5-8}$ cycloalkyl group or a $C_{6-12}$ alkylcycloalkyl group, still more preferably a $C_{4-8}$ alkyl group having a tertiary carbon atom, a cyclohexyl group or a 1-methylcyclohexyl group, further preferably a t-butyl group, a t-pentyl group or a t-octyl group, particularly preferably a t-butyl group.

$R^2$ is more preferably a $C_{1-8}$ alkyl group, a $C_{5-8}$ cycloalkyl group or a $C_{6-12}$ alkylcycloalkyl group, still more preferably a $C_{1-5}$ alkyl group, further preferably a methyl group, a t-butyl group or a t-pentyl group, particularly preferably a t-butyl group.

$R^5$ is more preferably a hydrogen atom, a $C_{1-8}$ alkyl group or a $C_{5-8}$ cycloalkyl group, still more preferably a hydrogen atom or a $C_{1-5}$ alkyl group, further preferably a hydrogen atom or a methyl group, particularly preferably a methyl group.

In the formula (1), $R^3$ is a hydrogen atom or a $C_{1-8}$ alkyl group. $R^3$ is preferably a hydrogen atom or a $C_{1-5}$ alkyl group, more preferably a hydrogen atom or a methyl group, further preferably a hydrogen atom.

In the formula (1), X is a single bond, a sulfur atom or a $-CHR^6-$ group wherein $R^6$ is a hydrogen atom, a $C_{1-8}$ alkyl group or a $C_{5-8}$ cycloalkyl group. $R^6$ is preferably a hydrogen atom or a $C_{1-5}$ alkyl group. X is preferably a single bond or a $-CHR^6-$group wherein $R^6$ is a hydrogen atom or a $C_{1-8}$ alkyl group, more preferably a single bond.

In the formula (1), A is a $C_{2-8}$ alkylene group or a $*-COR^7-$ group wherein $R^7$ is a single bond or a $C_{1-8}$ alkylene group, and * shows binding to the oxygen atom side. A is preferably a $C_{2-8}$ alkylene group, a carbonyl group or $*-CO-(CH_2)_2-$ wherein * shows binding to the oxygen atom side, more preferably a $C_{2-8}$ alkylene group, further preferably a trimethylene group.

In the formula (1), one of Y and Z is a hydroxy group, a $C_{1-8}$ alkoxy group or a $C_{7-12}$ aralkyloxy group and the other is a hydrogen atom or a $C_{1-8}$ alkyl group. It is preferable that one of Y and Z is a hydroxy group and the other is a hydrogen atom, and it is more preferable that Y is a hydroxy group and Z is a hydrogen atom.

As the combination of the substituents, a combination wherein $R^1$, $R^2$ and $R^4$ are each independently a $C_{1-8}$ alkyl group, a $C_{5-8}$ cycloalkyl group or a $C_{6-12}$ alkylcycloalkyl group, $R^5$ is a hydrogen atom, a $C_{1-8}$ alkyl group or a $C_{5-8}$ cycloalkyl group, $R^3$ is a hydrogen atom or a $C_{1-5}$ alkyl group, X is a single bond or a $-CHR^6-$ group wherein $R^6$ is a hydrogen atom or a $C_{1-8}$ alkyl group, A is a $C_{2-8}$ alkylene group, a carbonyl group or $*-CO-(CH_2)_2-$ wherein * shows binding to the oxygen atom side, one of Y and Z is a hydroxy group and the other is a hydrogen atom is preferable.

As the combination of the substituents, a combination wherein $R^1$ and $R^4$ are each independently a $C_{4-8}$ alkyl group having a tertiary carbon atom, a cyclohexyl group or a 1-methylcyclohexyl group, $R^2$ is a $C_{1-5}$ alkyl group, $R^5$ is a hydrogen atom or a $C_{1-5}$ alkyl group, $R^3$ is a hydrogen atom or a methyl group, X is a single bond, A is a $C_{2-8}$ alkylene group, Y is a hydroxy group, and Z is a hydrogen atom is more preferable.

As the combination of the substituents, a combination wherein $R^1$ and $R^4$ are each independently a t-butyl group, a t-pentyl group or a t-octyl group, $R^2$ is a methyl group, a t-butyl group or a t-pentyl group, $R^5$ is a hydrogen atom or a methyl group, $R^3$ is a hydrogen atom, X is a single bond, A is a trimethylene group, Y is a hydroxy group, and Z is a hydrogen atom is further preferable.

Of compounds (1), 6-[3-(3-t-butyl-4-hydroxy-5-methylphenyl)propoxy]-2,4,8,10-tetra-t-butyldibenzo[d,f][1,3,2]dioxaphosphepin is preferable, which is commercially available as "Sumilizer (registered trade mark) GP" from Sumitomo Chemical Company, Limited.

Compound (1) may be a commercially available product (e.g., "Sumilizer (registered trade mark) GP" manufactured by Sumitomo Chemical Company, Limited), or can be produced according to a known method (e.g., the method described in patent document 1).

<Mixture containing at least two kinds of compounds (2)>

One of the characteristics of the present invention is use of a mixture containing at least two kinds of compounds (2). The mixture containing at least two kinds of compounds (2) is preferably a liquid mixture. In the present specification, "liquid" means being liquid at room temperature and under atmospheric pressure. The groups that compound (2) has are successively explained below.

In the formula (2), $R^8$ - $R^{10}$ are each independently a $C_{6-18}$ aryl group substituted by at least one $C_{1-18}$ alkyl group.

The $C_{1-18}$ alkyl groups as substituents of $R^8$ - $R^{10}$ are preferably each independently a $C_{1-6}$ alkyl group, more preferably a $C_{4-5}$ alkyl group, further preferably a t-butyl group or a t-pentyl group, particularly preferably a t-pentyl group. The $C_{6-18}$ aryl group for $R^8$ - $R^{10}$ is preferably a phenyl group.

$R^8$ - $R^{10}$ are preferably each independently a group represented by the formula (3):

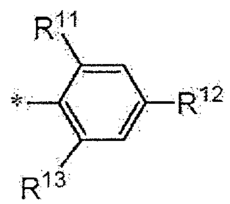

(3)

in the formula (3),

$R^{11}$ - $R^{13}$ are each independently a hydrogen atom or a $C_{1-6}$ alkyl group, provided that at least one of $R^{11}$ - $R^{13}$ is not a hydrogen atom, and
* shows binding to the oxygen atom side.

On the condition that at least one of $R^{11}$ - $R^{13}$ is not a hydrogen atom, $R^{11}$ - $R^{13}$ are each preferably a $C_{4-5}$ alkyl group, more preferably a t-butyl group or a t-pentyl group, further preferably a t-pentyl group.

The mixture preferably contains at least two kinds selected from the group consisting of compounds represented by any of the formula (2a) - formula (2d):

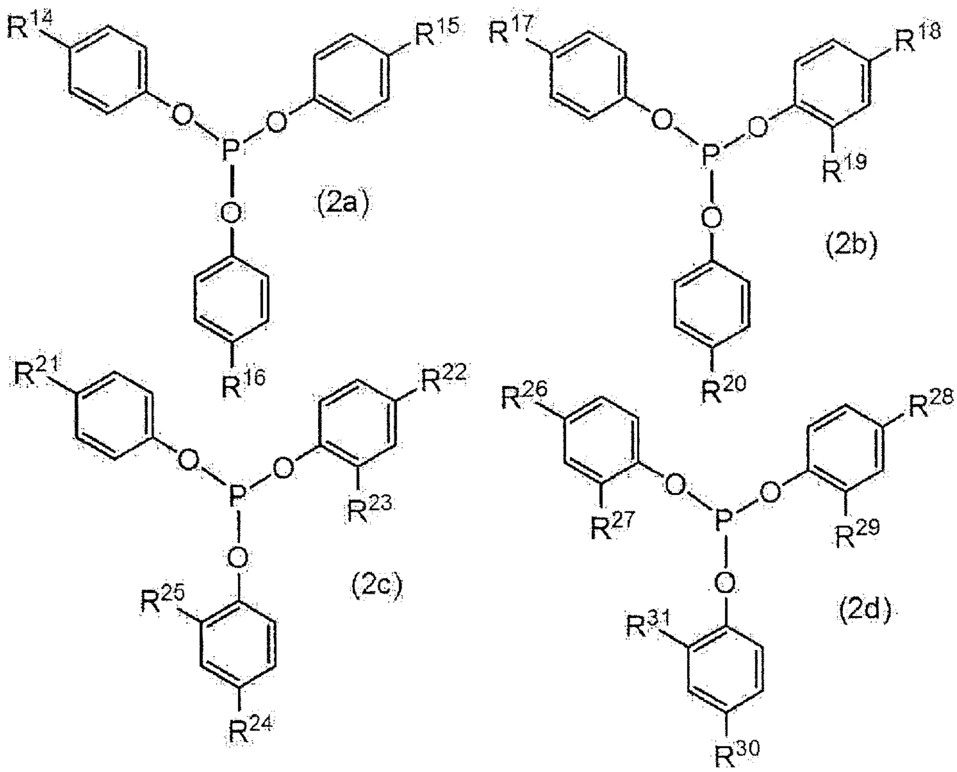

(2a) (2b) (2c) (2d)

in the formula (2a) - formula (2d), $R^{14}$ - $R^{31}$ are each independently a t-butyl group or a t-pentyl group.

Containing at least two kinds selected from the group consisting of compounds represented by any of the formula (2a) - formula (2d) (i.e., compound (2a) - compound (2d)) means that the mixture contains the following compounds:

(1) compound (2a) and compound (2b);
(2) compound (2a) and compound (2c);
(3) compound (2a) and compound (2d);
(4) compound (2b) and compound (2c);
(5) compound (2b) and compound (2d);
(6) compound (2c) and compound (2d);
(7) compound (2a), compound (2b) and compound (2c);
(8) compound (2a), compound (2b) and compound (2d);
(9) compound (2a), compound (2c) and compound (2d);
(10) compound (2b), compound (2c) and compound (2d); or
(11) compound (2a), compound (2b), compound (2c) and compound (2d) .

Each of compound (2a) - compound (2d) may be one compound alone, or may include two or more. For example, the mixture may contain tris(4-t-butylphenyl)phosphite alone as compound (2a), or two compounds of tris(4-t-butylphenyl)phosphite and tris(4-t-pentylphenyl)phosphite.

Compound (2a) - compound (2d) preferably have the same substituent (i.e., either t-butyl group or t-pentyl group alone). $R^{14}$ - $R^{31}$ in the formula (2a) - formula (2d) are each more preferably a t-pentyl group.

In liquid chromatography analysis under the conditions described in the following Examples, the proportion of compound (2a) to the mixture is preferably 15 - 70 area%, more preferably 20 - 65 area%, that of compound (2b) is preferably 10 - 60 area%, more preferably 20 - 50 area%, that of compound (2c) is preferably 0 - 30 area%, more preferably 2 - 20 area%, and that of compound (2d) is preferably 0 - 5 area%, more preferably 0 - 1 area%, wherein the total of the proportions of the aforementioned compounds is 100 area%.

The mixture preferably contains at least two selected from the group consisting of tris(4-t-pentylphenyl)phosphite (i.e., compound (2a) wherein $R^{14}$ - $R^{16}$ are t-pentyl groups), bis(4-t-pentylphenyl)-2,4-di-t-pentylphenylphosphite (i.e., compound (2b) wherein $R^{17}$ - $R^{20}$ are t-pentyl groups), bis(2,4-di-t-pentylphenyl)-4-t-pentylphenylphosphite (i.e., compound (2c) wherein $R^{21}$ - $R^{25}$ are t-pentyl groups) and tris (2,4-di-t-pentylphenyl)phosphite (i.e., compound (2d) wherein $R^{26}$ - $R^{31}$ are t-pentyl groups), or at least two selected from the group consisting of tris(4-t-butylphenyl)phosphite (i.e.,

compound (2a) wherein $R^{14}$ - $R^{16}$ are t-butyl groups), bis(4-t-butylphenyl)-2,4-di-t-butylphenylphosphite (i.e., compound (2b) wherein $R^{17}$ - $R^{20}$ are t-butyl groups), bis (2,4-di-t-butylphenyl)-4-t-butylphenylphosphite (i.e., compound (2c) wherein $R^{21}$ - $R^{25}$ are t-butyl groups), and tris(2,4-di-t-butylphenyl)phosphite (i.e., compound (2d) wherein $R^{26}$ - $R^{31}$ are t-butyl groups).

The mixture more preferably contains at least two selected from the group consisting of tris(4-t-pentylphenyl)phosphite, bis(4-t-pentylphenyl)-2,4-di-t-pentylphenylphosphite and bis(2,4-di-t-pentylphenyl)-4-t-pentylphenylphosphite.

The mixture further preferably contains tris(4-t-pentylphenyl)phosphite, bis(4-t-pentylphenyl)-2,4-di-t-pentylphenylphosphite and bis(2,4-di-t-pentylphenyl)-4-t-pentylphenylphosphite. The mixture is commercially available as "Weston (registered trade mark) 705" from Addivant.

In liquid chromatography analysis under the conditions described in the following Examples, the proportion of tris(4-t-pentylphenyl)phosphite to the mixture is preferably 15 - 70 area%, more preferably 20 - 65 area%, that of bis(4-t-pentylphenyl)-2,4-di-t-pentylphenylphosphite is preferably 10 - 60 area%, more preferably 20 - 50 area%, and that of bis(2,4-di-t-pentylphenyl)-4-t-pentylphenylphosphite is preferably 0 - 30 area%, more preferably 2 - 20 area%, wherein the total of the proportions of the aforementioned compounds is 100 area%.

The mixture containing at least two kinds of compounds (2) may be a commercially available product (e.g., "Weston (registered trade mark) 705" manufactured by Addivant), or can be produced according to a known method (e.g., the method described in WO2007/149143).

<Additive>

The phosphite composition of the present invention may contain an additive besides the aforementioned compound (1) and mixture containing at least two kinds of compounds (2) (hereinafter sometimes to be abbreviated as "other additive") as long as the effects of the present invention (suppression of decrease in transparency and improvement of stability) are not inhibited. Only one kind of other additive may be used or two or more kinds thereof may be used in combination. Other additives are successively explained below.

Examples of other additive include amines, acid-binding metal salt, phenolic antioxidant, sulfur antioxidant, phosphorus antioxidant, ultraviolet absorber, light stabilizer, metal deactivator, peroxide scavenger, polyamide stabilizer, hydroxyamine, neutralizing agent, lubricant, nucleating agent, filler, plasticizer, flame-retardant, antistatic agent, antiblocking agent, surfactant, processing aid, foaming agent, emulsifier, gloss agent, coloring-improving agent (e.g., 9,10-dihydro-9-oxa-10-phosphophenanthrene-10-oxide), and benzofurans and indolines described in US-B-4,325,853, 4,338,244, 5,175,312, 5,216,053, 5,252,643, 4,316,611, DE-A-4,316,622, 4,316,876, EP-A-589,839, 591,102 and the like. Only one kind of these may be used or two or more kinds thereof may be used in combination.

The hydrolysis resistance of compound (1) can be improved by adding amines and/or acid-binding metal salt to the phosphite composition of the present invention.

Examples of the amines include the following:
trialkanolamines such as triethanolamine, tripropanolamine, triisopropanolamine and the like, dialkanolamines such as diethanolamine, dipropanolamine, diisopropanolamine, tetraethanolethylenediamine, tetraisopropanolethylenediamine and the like, monoalkanolamines such as dibutylethanolamine, dibutylisopropanolamine and the like, aromatic amines such as 1,3,5-trimethyl-2,4,6-triazine and the like, alkylamines such as dibutylamine, piperidine, 2,2,6,6-tetramethylpiperidine, 4-hydroxy-2,2,6,6-tetramethylpiperidine and the like, polyalkylenepolyamines such as hexamethylenetetramine, triethylenediamine, triethylenetetramine, tetraethylenepentamine and the like, the below-mentioned hindered amine light stabilizer.

As amines, long chain aliphatic amine described in JP-A-61-63686, a compound containing the steric hindered amino group described in JP-A-6-329830, a hindered piperidinyl light stabilizer described in JP-A-7-90270, organic amine described in JP-A-7-278164 and the like can be used.

When amines are used, the amount thereof is preferably about 0.01 - 25 parts by weight per 100 parts by weight of compound (1) .

Examples of the acid-binding metal salt include hydrotalcites. Examples of the hydrotalcites include those represented by the following formula:

$$M^{2+}_{1-x} \cdot M^{3+}_{x} \cdot (OH^{-})_2 \cdot (A^{n-})_{x/n} \cdot pH_2O$$

wherein $M^{2+}$ is Mg, Ca, Sr, Ba, Zn, Pb, Sn and/or Ni, $M^{3+}$ is Al, B or Bi, n is a value of 1 - 4, x is a value of 0 - 0.5, p is a value of 0 - 2, and $A^{n-}$ is anion of n-valence.

Examples of $A^{n-}$ include $OH^-$, $Cl^-$, $Br^-$, $I^-$, $ClO_4^-$, $HCO_3^-$, $C_6H_5COO^-$, $CO_3^{2-}$, $SO^{2-}$, $^-OOCCOO^-$, $(CHOHCOO)_2^{2-}$, $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{4-}$ , $BO^{3-}$, $PO_3^{3-}$ and $HPO_4^{2-}$.

Of hydrotalcites, one represented by the following formula:

$$Mg_{1-x}Al_x(OH)_2(CO_3)_{x/2} \cdot pH_2O$$

wherein x and p are as defined above, is preferable.

Hydrotalcites may be natural products or synthetic products, and can be used irrespective of the crystal structures thereof, crystal particle size thereof and the like.

Furthermore, ultrafine zinc oxide described in JP-A-6-329830, inorganic compounds described in JP-A-7-278164 and the like can also be used as an acid-binding metal salt.

When an acid-binding metal salt is used, the amount thereof is preferably about 0.01 - 25 parts by weight per 100 parts by weight of compound (1).

Examples of the phenolic antioxidant include the following:

(1) alkylated monophenol

2,6-di-t-butyl-4-methylphenol, 2,4,6-tri-t-butylphenol, 2,6-di-t-butylphenol, 2-t-butyl-4,6-dimethylphenol, 2,6-di-t-butyl-4-ethylphenol, 2,6-di-t-butyl-4-n-butylphenol, 2,6-di-t-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-t-butyl-4-methoxymethylphenol, 2,6-di-nonyl-4-methylphenol, 2,4-dimethyl-6-(1'-methylundecyl-1'-yl)phenol, 2,4-dimethyl-6-(1'-methylheptadecyl-1'-yl)phenol, 2,4-dimethyl-6-(1'-methyltridecyl-1'-yl)phenol and mixtures thereof.

(2) alkylthiomethylphenol

2,4-dioctylthiomethyl-6-t-butylphenol, 2,4-dioctylthiomethyl-6-methylphenol, 2,4-dioctylthiomethyl-6-ethylphenol, 2,6-didodecylthiomethyl-4-nonylphenol and mixtures thereof.

(3) hydroquinone and alkylated hydroquinone

2,6-di-t-butyl-4-methoxyphenol, 2,5-di-t-butylhydroquinone, 2,5-di-t-amylhydroquinone, 2,6-diphenyl-4-octadecyloxyphenol, 2,6-di-t-butylhydroquinone, 2,5-di-t-butyl-4-hydroxyanisole, 3,5-di-t-butyl-4-hydroxyphenyl stearate, bis(3,5-di-t-butyl-4-hydroxyphenyl)adipate and mixtures thereof.

(4) tocopherol

α-tocopherol, β-tocopherol, γ-tocopherol, δ-tocopherol and mixtures thereof.

(5) hydroxylated thiodiphenylether

2,2'-thiobis(6-t-butylphenol), 2,2'-thiobis(4-methyl-6-t-butylphenol), 2,2'-thiobis(4-octylphenol), 4,4'-thiobis(3-methyl-6-t-butylphenol), 4,4'-thiobis(2-methyl-6-t-butylphenol), 4,4'-thiobis(3,6-di-t-amylphenol), 4,4'-(2,6-dimethyl-4-hydroxyphenyl) disulfide.

(6) alkylidene bisphenol and derivative thereof

2,2'-methylene bis(4-methyl-6-t-butylphenol), 2,2'-methylene bis(4-ethyl-6-t-butylphenol), 2,2'-methylene bis[4-methyl-6-(α-methylcyclohexyl)phenol)], 2,2'-methylene bis(4-methyl-6-cyclohexylphenol), 2,2'-methylene bis(4-methyl-6-nonylphenol), 2,2'-methylene bis(4,6-di-t-butylphenol), 2,2'-ethylidene bis(4,6-di-t-butylphenol), 2,2'-ethylidene bis(4-isobutyl-6-t-butylphenol), 2,2'-methylene bis[6-(α-methylbenzyl)-4-nonylphenol], 2,2'-methylene bis[6-(α,α-dimethylbenzyl)-4-nonylphenol], 4,4'-methylene bis(6-t-butyl-2-methylphenol), 4,4'-methylene bis(2,6-di-t-butylphenol), 4,4'-butylidene bis(3-methyl-6-t-butylphenol), 1,1-bis(4-hydroxyphenyl)cyclohexane, 1,1-bis(5-t-butyl-4-hydroxy-2-methylphenyl)butane, 2,6-bis(3-t-butyl-5-methyl-2-hydroxybenzyl)-4-methylphenol, 1,1,3-tris(5-t-butyl-4-hydroxy-2-methylphenyl)butane, 1,1-bis(5-t-butyl-4-hydroxy-2-methylphenyl)-3-n-dodecylmercaptobutane, ethylene glycol bis[3,3-bis-3'-t-butyl-4'-hydroxyphenyl)butyrate], bis(3-t-butyl-4-hydroxy-5-methylphenyl)dicyclopentadiene, bis[2-(3'-t-butyl-2'-hydroxy-5'-methylbenzyl)-6-t-butyl-4-methylphenyl]terephthalate, 1,1-bis(3,5-dimethyl-2-hydroxyphenyl)butane, 2,2-bis(3,5-di-t-butyl-4-hydroxyphenyl)propane, 2,2-bis(5-t-butyl-4-hydroxy-2-methylphenyl)-4-n-dodecylmercaptobutane, 1,1,5,5-tetra(5-t-butyl-4-hydroxy-2-methylphenyl)pentane, 2-t-butyl-6-(3'-t-butyl-5'-methyl-2'-hydroxybenzyl)-4-methylphenyl acrylate, 2,4-di-t-pentyl-6-[1-(2-hydroxy-3,5-di-t-pentylphenyl)ethyl]phenyl acrylate and mixtures thereof.

(7) O-, N- and S-benzyl derivatives

3,5,3',5'-tetra-t-butyl-4,4'-dihydroxydibenzyl ether, octadecyl-4-hydroxy-3,5-dimethylbenzylmercaptoacetate, tris(3,5-di-t-butyl-4-hydroxybenzyl)amine, bis(4-t-butyl-3-hydroxy-2,6-dimethylbenzyl)dithioterephthalate, bis(3,5-di-t-butyl-4-hydroxybenzyl)sulfide, isooctyl-3,5-di-t-butyl-4-hydroxybenzylmercaptoacetate and mixtures thereof.

(8) hydroxybenzylated malonate derivative

dioctadecyl-2,2-bis(3,5-di-t-butyl-2-hydroxybenzyl)malonate, dioctadecyl-2-(3-t-butyl-4-hydroxy-5-methylbenzyl)malonate, didodecylmercaptoethyl-2,2-bis(3,5-di-t-butyl-4-hydroxybenzyl)malonate, bis[4-(1,1,3,3-tetramethylbutyl)phenyl]-2,2-bis(3,5-di-t-butyl-4-hydroxybenzyl)malonate and mixtures thereof.

(9) aromatic hydroxybenzyl derivative

1,3,5-trimethyl-2,4,6-tris(3,5-di-t-butyl-4-hydroxybenzyl)benzene, 1,4-bis(3,5-di-t-butyl-4-hydroxybenzyl)-2,3,5,6-tetramethylbenzene, 2,4,6-tris(3,5-t-butyl-4-hydroxybenzyl)phenol and mixtures thereof.

(10) triazine derivative

2,4-bis(n-octylthio)-6-(4-hydroxy-3,5-di-t-butylanilino)-1,3,5-triazine, 2-n-octylthio-4,6-bis(4-hydroxy-3,5-di-t-butylanilino)-1,3,5-triazine, 2-n-octylthio-4,6-bis(4-hydroxy-3,5-di-t-butylphenoxy)-1,3,5-triazine, 2,4,6-tris(3,5-di-t-butyl-4-phenoxy)-1,3,5-triazine, tris(4-t-butyl-3-hydroxy-2,6-dimethylbenzyl)isocyanurate, tris(3,5-di-t-butyl-4-hydroxybenzyl)isocyanurate, 2,4,6-tris(3,5-di-t-butyl-4-hydroxyphenylethyl)-1,3,5-triazine, 2,4,6-tris(3,5-di-t-butyl-4-hydroxyphenylpropyl)-1,3,5-triazine, tris(3,5-dicyclohexyl-4-hydroxybenzyl)isocyanurate, tris[2-(3',5'-di-t-butyl-4'-hydroxycinnamoyloxy)ethyl]isocyanurate and mixtures thereof.

(11) benzylphosphonate derivative

dimethyl-3,5-di-t-butyl-4-hydroxybenzylphosphonate, diethyl-3,5-di-t-butyl-4-hydroxybenzylphosphonate, dioctadecyl-3,5-di-t-butyl-4-hydroxybenzylphosphonate, dioctadecyl-5-t-butyl-4-hydroxy-3-methylbenzylphosphonate, calcium salt of 3,5-di-t-butyl-4-hydroxybenzylphosphonic acid monoester and mixtures thereof.

(12) acylaminophenol derivative

4-hydroxylauryl anilide, 4-hydroxystearic anilide, octyl-N-(3,5-di-t-butyl-4-hydroxyphenyl)carbamate and mixtures thereof.

(13) ester of β-(3,5-di-t-butyl-4-hydroxyphenyl)propionic acid and the following monovalent or polyvalent alcohol

methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and mixtures thereof.

(14) ester of β-(5-t-butyl-4-hydroxy-3-methylphenyl)propionic acid and the following monovalent or polyvalent alcohol

methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and mixtures thereof.

(15) ester of β-(3,5-dicyclohexyl-4-hydroxyphenyl)propionic acid and the following monovalent or polyvalent alcohol

methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and mixtures thereof.

(16) ester of 3,5-di-t-butyl-4-hydroxyphenylacetic acid and the following monovalent or polyvalent alcohol

methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and mixtures thereof.

(17) β-(3,5-di-t-butyl-4-hydroxyphenyl)propionic acid amide

N,N'-bis[3-(3',5'-di-t-butyl-4'-hydroxyphenyl)propionyl]hydrazine, N,N'-bis[3-(3',5'-di-t-butyl-4'-hydroxyphenyl)propionyl]hexamethylenediamine, N,N'-bis[3-(3',5'-di-t-butyl-4'-hydroxyphenyl)propionyl]trimethylenediamine and mixtures thereof.

Examples of the sulfur antioxidant include the following:
dilauryl 3,3'-thiodipropionate, tridecyl 3,3'-thiodipropionate, dimyristyl 3,3'-thiodipropionate, distearyl 3,3'-thiodipropionate, lauryl stearyl 3,3'-thiodipropionate, neopentanetetrayl tetrakis(3-laurylthiopropionate).

Examples of the phosphorus antioxidant include the following:
triphenyl phosphite, trilauryl phosphite, trioctadecyl phosphite, distearyl pentaerythritol diphosphite, diisodecyl pentaerythritol diphosphite, bis(2,4-di-t-butylphenyl) pentaerythritol diphosphite, bis(2,4-di-t-butyl-6-methylphenyl) pentaerythritol diphosphite, bis(2,6-di-t-butyl-4-methylphenyl) pentaerythritol diphosphite, bis(2,4,6-tri-t-butylphenyl) pentaerythritol diphosphite, tristearyl sorbitol triphosphite, tetrakis(2,4-di-t-butylphenyl)-4,4'-diphenylene diphosphonite, 2,2'-methylene bis(4,6-di-t-butylphenyl) 2-ethylhexyl phosphite, 2,2'-ethylidene bis(4,6-di-t-butylphenyl) fluoro phosphite, bis(2,4-di-t-butyl-6-methylphenyl) ethyl phosphite, bis(2,4-dit-butyl-6-methylphenyl) methyl phosphite, 2-(2,4,6-tri-t-butylphenyl)-5-ethyl-5-butyl-1,3,2-oxaphosphorinan, 2,2',2"-nitrilo [triethyl-tris(3,3',5,5'-tetra-t-butyl-1,1'-biphenyl-2,2'-diyl) phosphite, and mixtures thereof.

Examples of the ultraviolet absorber include the following:

(1) salicylate derivative

phenyl salicylate, 4-t-butylphenyl salicylate, 2,4-di-t-butylphenyl 3',5'-di-t-butyl-4'-hydroxybenzoate, 4-t-octylphenyl salicylate, bis(4-t-butylbenzoyl)resorcinol, benzoylresorcinol, hexadecyl 3',5'-di-t-butyl-4'-hydroxybenzoate, octadecyl 3',5'-di-t-butyl-4'-hydroxybenzoate, 2-methyl-4,6-di-t-butylphenyl 3',5'-di-t-butyl-4'-hydroxybenzoate and mixtures thereof.

(2) 2-hydroxybenzophenone and derivative thereof

2-hydroxybenzophenone, 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone and mixtures thereof.

(3) 2-(2'-hydroxyphenyl)benzotriazole and derivative thereof

2-(2'-hydroxyphenyl)benzotriazole, 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-s-butyl-2'-hydroxy-5'-t-butylphenyl)benzotriazole, 2-(2'-hydroxy-4'-octyloxyphenyl)benzotriazole, 2-(3',5'-di-t-amyl-2'-hydroxyphenyl)benzotriazole, 2-[2'-hydroxy-3',5'-bis(α,α-dimethylbenzyl)phenyl]-2H-benzotriazole, 2-[(3'-t-butyl-2'-hydroxyphenyl)-5'-(2-octyloxycarbonylethyl)phenyl]-5-chlorobenzotriazole, 2-[3'-t-butyl-5'-[2-(2-ethylhexyloxy)carbonylethyl]-2'-hydroxyphenyl]-5-chlorobenzotriazole, 2-[3'-t-butyl-2'-hydroxy-5'-(2-methoxycarbonylethyl)phenyl]-5-chlorobenzotriazole, 2-[3'-t-butyl-2'-hydroxy-5'-(2-methoxycarbonylethyl)phenyl]benzotriazole, 2-[3'-t-butyl-2'-hydroxy-5-(2-octyloxycarbonylethyl)phenyl]benzotriazole, 2-[3'-t-butyl-2'-hydroxy-5'-[2-(2-ethylhexyloxy)carbonylethyl]phenyl]benzotriazole, 2-[2-hydroxy-3-(3,4,5,6-tetrahydrophthalimidomethyl)-5-methylphenyl]benzotriazole, 2-(3,5-di-t-butyl-2-hydroxyphenyl)-5-chlorobenzotriazole, mixture of 2-(3'-dodecyl-2'-hydroxy-5'-methylphenyl)benzotriazole and 2-[3'-t-butyl-2'-hydroxy-5'-(2-isooctyloxycarbonylethyl)phenyl]benzotriazole, 2,2'-methylene bis[6-(2H-benzotriazol-2-yl)-4-(1,1,3,3-tetramethylbutyl)phenol, 2,2'-methylene bis[4-t-butyl-6-(2H-benzotriazol-2-yl)phenol], condensate of poly(3-11)(ethylene glycol) and 2-[3'-t-butyl-2'-hydroxy-5'-(2-methoxycarbonylethyl)phenyl]benzotriazole, condensate of poly(3-11)(ethylene glycol) and methyl 3-[3-(2H-benzotriazol-2-yl)-5-t-butyl-4-hydroxyphenyl]propionate, 2-ethylhexyl 3-[3-t-butyl-5-(5-chloro-2H-benzotriazol-2-yl)-4-hydroxyphenyl]propionate, octyl 3-[3-t-butyl-5-(5-chloro-2H-benzotriazol-2-yl)-4-hydroxyphenyl]propionate, methyl 3-[3-t-butyl-5-(5-chloro-2H-benzotriazol-2-yl)-4-hydroxyphenyl]propionate, 3-[3-t-butyl-5-(5-chloro-2H-benzotriazol-2-yl)-4-hydroxyphenyl]propionic acid and mixtures thereof.

Examples of the light stabilizer include the following:

(1) hindered amine light stabilizer

bis(2,2,6,6-tetramethyl-4-piperidyl) sebacate, bis((2,2,6,6-tetramethyl-4-piperidyl) succinate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl) 2-(3,5-di-t-butyl-4-hydroxybenzyl)-2-butylmalonate, bis(1-acroyl-2,2,6,6-tetramethyl-4-piperidyl) 2,2-bis(3,5-di-t-butyl-4-hydroxybenzyl)-2-butylmalonate, bis(1,2,2,6,6-pentamethyl-4-piperidyl decanedioate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2, 6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, mixed ester of 1,2,3,4-butanetetracarboxylic acid, 1,2,2,6,6-pentamethyl-4-piperidinol and 1-tridecanol, mixed ester of 1,2,3,4-butanetetracarboxylic acid, 2,2,6,6-tetramethyl-4-piperidinol and 1-tridecanol, mixed ester of 1,2,3,4-butanetetracarboxylic acid, 1,2,2,6,6-pentamethyl-4-piperidinol and 3,9-bis(2-hydroxy-1,1-dimethylethyl)-2,4,8,10-tetraoxaspiro[5.5]undecane, mixed ester of 1,2,3,4-butanetetracarboxylic acid, 2,2,6,6-tetramethyl-4-piperidinol and 3,9-bis(2-hydroxy-1,1-dimethylethyl)-2,4,8,10-tetraoxaspiro[5.5]undecane, polycondensate of dimethyl succinate and 1-(2-hydroxyethyl)-4-hydroxy-2,2,6,6-tetramethylpiperidine, poly[(6-morpholino-1,3,5-triazine-2,4-diyl) ((2,2,6,6-tetramethyl-4-piperidyl)imino)hexamethylene((2,2,6,6-tetramethyl-4-piperidyl)imino)], poly[(6-(1,1,3,3-tetramethylbutyl)imino-1,3,5-triazine-2,4-diyl((2,2,6,6-tetramethyl-4-piperidyl)imino)hexamethylene((2,2,6,6-tetramethyl-4-piperidyl)imino)], polycondensate of N,N'-bis(2,2,6,6-tetramethyl-4-piperidyl)hexamethylenediamine and 1,2-dibromoethane, N,N',4,7-tetrakis[4,6-bis(N-butyl-N-(2,2,6,6-tetramethyl-4-piperidyl)amino)-1,3,5-triazin-2-yl]-4,7-diazadecane-1,10 diamine, N,N',4-tris[4,6-bis(N-butyl-N-(2,2,6,6-tetramethyl-4-piperidyl)amino)-1,3,5-triazin-2-yl]-4,7-diazadecane-1,10-diamine, N,N',4,7-tetrakis[4,6-bis(N-butyl-N-(1,2,2,6,6-pentamethyl-4-piperidyl)amino)-1,3,5-triazin-2-yl]-4,7-diazadecane-1,10-diamine, N,N',4-tris[4,6-bis(N-butyl-N-(1,2,2,6,6-pentamethyl-4-piperidyl)amino)-1,3,5-triazin-2-yl]-4,7-diazadecane-1,10-diamine and mixtures thereof.

(2) acrylate light stabilizer

ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-p-cyanovinyl)-2-methylindoline and mixtures thereof.

(3) nickel light stabilizer

nickel complex of 2,2'-thiobis-[4-(1,1,3,3-tetramethylbutyl)phenol], nickel dibutyldithiocarbamate, nickel salt of monoalkylester, nickel complex of ketoxime and mixtures thereof.

(4) oxamide light stabilizer

4,4'-dioctyloxyoxanilide, 2,2'-diethoxyoxanilide, 2,2'-dioctyloxy-5,5'-di-t-butylanilide, 2,2'-didodecyloxy-5,5'-di-t-butylanilide, 2-ethoxy-2'-ethyloxanilide, N,N'-bis(3-dimethylaminopropyl)oxamide, 2-ethoxy-5-t-butyl-2'-ethoxyanilide, 2-ethoxy-5,4'-di-t-butyl-2'-ethyloxanilide and mixtures thereof.

(5) 2-(2-hydroxyphenyl)-1,3,5-triazine light stabilizer

2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-[2,4-dihydroxyphenyl-4,6-bis(2,4-dimethylphenyl]-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethylphenyl)-1,3,5-triazine, 2-[2-hydroxy-4-(2-hydroxy-3-octyloxypropoxy)phenyl]-4,6-bis(2,4-dimethyl phenyl)-1,3,5-triazine and mixtures thereof.

Examples of the metal deactivator include the following:

N,N'-diphenyloxamide, N-salicylal-N'-salicyloylhydrazine, N,N'-bis(salicyloyl)hydrazine, N,N'-bis(3,5-di-t-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenyl hydrazide, N,N'-bis(salicyloyl)oxalyl dihydrazide, N,N'-bis(salicyloyl)thiopropionyl dihydrazide and mixtures thereof.

Examples of the peroxide scavenger include the following:
ester of β-thiodipropionic acid, mercaptobenzoimidazole, zinc salt of 2-mercaptobenzoimidazole, zinc salt of dibutyldithiocarbamic acid, dioctadecyl disulfide, pentaerythritol tetrakis(β-dodecylmercapto)propionate and mixtures thereof.

Examples of the polyamide stabilizer include copper or divalent manganese salt of iodide or phosphorous compound and mixtures thereof.

Examples of the hydroxyamine include the following:
N,N-dibenzylhydroxyamine, N,N-diethylhydroxyamine, N,N-dioctylhydroxyamine, N,N-dilaurylhydroxyamine, N,N-ditetradecylhydroxyamine, N,N-dihexadecylhydroxyamine, N,N-dioctadecylhydroxyamine, N-hexadecyl-N-octadecylhydroxyamine, N-heptadecyl-N-octadecylhydroxyamine and mixtures thereof.

Examples of the neutralizing agent include the following:
calcium stearate, zinc stearate, magnesium stearate, hydrotalcite (basic magnesium•aluminum•hydroxy•carbonate• hydrate), melamine, amine, polyamide, polyurethane and mixtures thereof.

Examples of the lubricant include the following:
aliphatic hydrocarbons such as paraffin, wax and the like, $C_{8-22}$ higher fatty acid, $C_{8-22}$ higher fatty acid metal (Al, Ca, Mg, Zn) salt, $C_{8-22}$ aliphatic alcohol, polyglycol, ester of $C_{4-22}$ higher fatty acid and $C_{4-18}$ monovalent aliphatic alcohol, $C_{8-22}$ higher aliphatic amide, silicone oil, rosin derivative.

Examples of the nucleating agent include the following:
sodium 2,2'-methylene bis(4,6-di-t-butylphenyl)phosphate, dihydrooxyaluminum [phosphate-2,2'-methylene bis(4,6-di-t-butylphenyl)], hydrooxyaluminum bis[phosphate-2,2'-methylene bis(4,6-di-t-butylphenyl)], aluminum tris[phosphate-2,2'-methylene bis(4,6-di-t-butylphenyl)], sodium bis(4-t-butylphenyl)phosphate, metal benzoate such as sodium benzoate and the like, aluminum p-t-butylbenzoate, 1,3:2,4-bis(O-benzylidene)sorbitol, 1,3:2,4-bis(O-methylbenzylidene)sorbitol, 1,3:2,4-bis(O-ethylbenzylidene)sorbitol, 1,3-O-3,4-dimethylbenzylidene-2,4-O-benzylidenesorbitol, 1,3-O-benzylidene-2,4-O-3,4-dimethylbenzylidenesorbitol, 1,3:2,4-bis(O-3,4-dimethylbenzylidene)sorbitol, 1,3-O-p-chlorobenzylidene-2,4-0-3,4-dimethylbenzylidenesorbitol, 1,3-O-3,4-dimethylbenzylidene-2,4-O-p-chlorobenzylidenesorbitol, 1,3:2,4-bis(O-p-chlorobenzylidene)sorbitol and mixtures thereof.

Examples of the filler include the following:
calcium carbonate, silicate, glass fiber, asbestos, talc, kaolin, mica, barium sulfate, carbon black, carbon fiber, zeolite and mixtures thereof.

Of the aforementioned other additives, phenolic antioxidant, phosphorus antioxidant, ultraviolet absorber, hindered amine light stabilizer, peroxide scavenger and neutralizing agent are preferable.

Particularly preferable phenolic antioxidant includes the following. Only one kind thereof may be used, or two or more kinds thereof may be used in combination.

2,6-di-t-butyl-4-methylphenol, 2,4,6-tri-t-butylphenol, 2,4-dioctylthiomethyl-6-methylphenol, 2,2'-thiobis(6-t-butylphenol), 4,4'-thiobis(3-methyl-6-t-butylphenol), 2,2'-methylene bis(4-methyl-6-t-butylphenol), 2,2'-methylene bis(4-ethyl-6-t-butylphenol), 2,2'-methylene bis[4-methyl-6-(α-methylcyclohexyl)phenol)], 2,2'-methylene bis(4-methyl-6-cyclohexylphenol), 2,2'-methylene bis(4,6-di-t-butylphenol), 2,2'-ethylidene bis(4,6-di-t-butylphenol), 4,4'-methylene bis(6-t-butyl-2-methylphenol), 4,4'-methylene bis(2,6-di-t-butylphenol), 4,4'-butylidene bis(3-methyl-6-t-butylphenol), 1,1-bis(4-hydroxyphenyl)cyclohexane, 1,1-bis(5-t-butyl-4-hydroxy-2-methylphenyl)butane, 1,1,3-tris(5-t-butyl-4-hydroxy-2-methylphenyl)butane, ethylene glycol bis[3,3-bis-3'-t-butyl-4'-hydroxyphenyl)butyrate], 2-t-butyl-6-(3'-t-butyl-5'-methyl-2'-hydroxybenzyl)-4-methylphenyl acrylate, 2,4-di-t-pentyl-6-[1-(2-hydroxy-3,5-di-t-pentylphenyl)ethyl]phenyl acrylate, 2,4,6-tris(3,5-di-t-butyl-4-phenoxy)-1,3,5-triazine, tris(4-t-butyl-3-hydroxy-2,6-dimethylbenzyl)isocyanurate, bis(3,5-di-t-butyl-4-hydroxybenzyl)isocyanurate, tris[2-(3',5'-di-t-butyl-4'-hydroxycinnamoyloxy)ethyl]isocyanurate, diethyl-3,5-di-t-butyl-4-hydroxybenzylphosphonate, di-n-octadecyl-3,5-di-t-butyl-4-hydroxybenzylphosphonate, calcium salt of 3,5-di-t-butyl-4-hydroxybenzylphosphonic acid monoester, n-octadecyl 3-(3,5-di-t-butyl-4-hydroxyphenyl) propionate, neopentanetetrayl tetrakis(3,5-di-t-butyl-4-hydroxycinnamate), thiodiethylene bis(3,5-di-t-butyl-4-hydroxycinnamate), 1,3,5-trimethyl-2,4,6-tris(3,5-di-t-butyl-4-hydroxybenzyl)benzene, 3,6-dioxaoctamethylene bis(3,5-di-t-butyl-4-hydroxycinnamate), hexamethylene bis(3,5-di-t-butyl-4-hydroxycinnamate), triethylene glycol bis(5-t-tyl-4-hydroxy-3-methylcinnamate), 3,9-bis[2-(3-(3-t-butyl-4-hydroxy-5-methylphenyl)propionyloxy)-1,1-dimethylethyl]-2,4,8,10-tetraoxaspiro[5.5]undecane, N,N'-bis[3-(3',5'-di-t-butyl-4'-hydroxyphenyl)propionyl]hydrazine, N,N'-bis[3-(3',5'-di-t-butyl-4'-hydroxyphenyl)propionyl]hexamethylenediamine.

Particularly preferable phosphorus antioxidant includes the following. Only one kind thereof may be used, or two or more kinds thereof may be used in combination.

distearyl pentaerythritol diphosphite, bis(2,4-di-t-butylphenyl) pentaerythritol diphosphite, bis(2,4-di-t-butyl-6-methylphenyl) pentaerythritol diphosphite, bis(2,6-di-t-butyl-4-methylphenyl) pentaerythritol diphosphite, tetrakis(2,4-di-t-butylphenyl)-4,4'-diphenylene diphosphonite, 2,2'-methylene bis(4,6-di-t-butylphenyl) 2-ethylhexyl phosphite, 2,2'-ethylidene bis(4,6-di-t-butylphenyl) fluoro phosphite, bis(2,4-di-t-butyl-6-methylphenyl) ethyl phosphite, 2-(2,4,6-tri-t-butylphenyl)-5-ethyl-5-butyl-1,3,2-oxaphosphorinan, 2,2',2"-nitrilo[triethyl-tris(3,3',5,5'-tetra-t-butyl-1,1'-biphenyl-2,2'-diyl) phosphite.

Particularly preferable ultraviolet absorber includes the following. Only one kind thereof may be used, or two or more kinds thereof may be used in combination.

phenyl salicylate, 4-t-butylphenyl salicylate, 2,4-di-t-butylphenyl 3',5'-di-t-butyl-4'-hydroxybenzoate, 4-t-octylphenyl salicylate, 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone, 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-s-butyl-2'-hydroxy-5'-t-butylphenyl)benzotriazole, 2-(2'-hydroxy-4'-octyloxyphenyl)benzotriazole, 2-(3',5'-di-t-amyl-2'-hydroxyphenyl)benzotriazole, 2-[2'-hydroxy-3',5'-bis($\alpha$,$\alpha$-dimethylbenzyl)phenyl]-2H-benzotriazole.

Particularly preferable light stabilizer includes the following. Only one kind thereof may be used, or two or more kinds thereof may be used in combination.

bis(2,2,6,6-tetramethyl-4-piperidyl) sebacate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl) 2-(3,5-di-t-butyl-4-hydroxybenzyl)-2-butylmalonate, bis(1-acroyl-2,2,6,6-tetramethyl-4-piperidyl) 2,2-bis(3,5-di-t-butyl-4-hydroxybenzyl)-2-butylmalonate, bis(2,2,6,6-tetramethyl-4-piperidyl) succinate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate, tetrakis(1,2,6,6-pentamethyl-4-piperidyl) 1,2,3,4-butanetetracarboxylate, mixed ester of 1,2,3,4-butanetetracarboxylic acid, 1,2,2,6,6-pentamethyl-4-piperidinol and 1-tridecanol, mixed ester of 1,2,3,4-butanetetracarboxylic acid, 2,2,6,6-tetramethyl-4-piperidinol and 1-tridecanol, mixed ester of 1,2,3,4-butanetetracarboxylic acid, 1,2,2,6,6-pentamethyl-4-piperidinol and 3,9-bis(2-hydroxy-1,1-dimethylethyl)-2,4,8,10-tetraoxaspiro[5.5]undecane, mixed ester of 1,2,3,4-butanetetracarboxylic acid, 2,2,6,6-tetramethyl-4-piperidinol and 3,9-bis(2-hydroxy-1,1-dimethylethyl)-2,4,8,10-tetraoxaspiro[5.5]undecane, polycondensate of dimethyl succinate and 1-(2-hydroxyethyl)-4-hydroxy-2,2,6,6-tetramethylpiperidine, poly[(6-morpholino-1,3,5-triazine-2,4-diyl) ((2,2,6,6-tetramethyl-4-piperidyl)imino)hexamethylene((2,2,6,6-tetramethyl-4-piperidyl)imino)], poly[(6-(1,1,3,3-tetramethylbutyl)-1,3,5-triazine-2,4-diyl) ((2,2,6,6-tetramethyl-4-piperidyl)imino)hexamethylene((2,2,6,6-tetramethyl-4-piperidyl)imino)].

<Phosphite composition>

The phosphite composition of the present invention contains compound (1), a mixture containing at least two kinds of compounds (2), and other additive as necessary. The phosphite composition of the present invention may be produced by first preparing a mixture containing at least two kinds of compounds (2), and then mixing the obtained mixture with compound (1) and other additive as necessary. In addition, the phosphite composition of the present invention may be produced by mixing compound (1), at least two kinds of compounds (2), and other additive where necessary, without preparing the mixture in advance.

The proportion of compound (1) to the total of compound (1) and the mixture containing at least two kinds of compounds (2) is preferably 5 - 95 wt%, more preferably 7 - 80 wt%, further preferably 8 - 25 wt% or 50 - 80 wt%, from the aspects of transparency of an organic material composition containing the phosphite composition of the present invention and the like. Compound (1) is basically solid at room temperature and under an atmospheric pressure. When the mixture containing at least two kinds of compounds (2) is a liquid mixture and the aforementioned proportion is small, the phosphite composition of the present invention can be produced as a liquid form by mixing compound (1) and the liquid mixture, and heating the obtained mixture at a temperature of about 50°C. Thus, to liquidize the phosphite composition of the present invention to improve handling property thereof and from the aspects of the aforementioned transparency, the aforementioned proportion is preferably 5 - 40 wt%, more preferably 7 - 30 wt%, further preferably 10 - 25 wt%.

<Stabilizer for organic material, stabilizing method of organic material and stabilized organic material composition>

The phosphite composition of the present invention can suppress thermal degradation and oxidation degradation of an organic material, and can improve stability (particularly processing stability) of an organic material composition. Therefore, the present invention also provides (1) a stabilizer for an organic material, containing the phosphite composition of the present invention, (2) a method of stabilizing an organic material, comprising adding the phosphite composition of the present invention to the organic material, and (3) a stabilized organic material composition containing an organic material and the phosphite composition of the present invention.

The stabilized organic material composition may be produced by first preparing the phosphite composition of

the present invention, and then mixing the obtained phosphite composition of the present invention with an organic material. In addition, the stabilized organic material composition may be produced by mixing compound (1), at least two kinds of compounds (2), and other additive where necessary, without preparing the phosphite composition of the present invention in advance. That is, the phosphite composition may be prepared in a stabilized organic material composition, without preparing the phosphite composition of the present invention in advance.

Only one kind of an organic material may be used, or two or more kinds thereof may be used in combination. Examples of the organic material include those indicated below, though the present invention is not limited by the following organic materials.

thermoplastic resins such as

(1) polyethylene, for example, high-density polyethylene (HD-PE), low-density polyethylene (LD-PE), linear low-density polyethylene (LLDPE)
(2) polypropylene
(3) methylpentene polymer
(4) EEA (ethylene/ethyl acrylate copolymer) resin
(5) ethylene/vinyl acetate copolymer resin
(6) polystyrenes, for example, polystyrene, poly(p-methylstyrene), poly($\alpha$-methylstyrene)
(7) AS (acrylonitrile/styrene copolymer) resin
(8) ABS (acrylonitrile/butadiene/styrene copolymer) resin
(9) AAS (special acrylic rubber/acrylonitrile/styrene copolymer) resin
(10) ACS (acrylonitrile/chlorinated polyethylene/styrene copolymer) resin
(11) chlorinated polyethylene, polychloroprene, chlorinated rubber
(12) polyvinyl chloride, polyvinyldene chloride
(13) methacrylic resin
(14) ethylene/vinyl alcohol copolymer resin
(15) fluororesin
(16) polyacetal
(17) grafted polyphenylene ether resin and polyphenylene sulfide resin
(18) polyurethane
(19) polyamide
(20) polyester, for example, poly(ethylene terephthalate), poly(butylene terephthalate)
(21) polycarbonate
(22) polyacrylate
(23) polysulfone, polyether ether ketone, polyether sulfone
(24) aromatic polyester resin

and the like

thermosetting resins such as

(25) epoxy resin
(26) diallyl phthalate prepolymer
(27) silicone resin
(28) unsaturated polyester resin
(29) acrylic modified benzoguanamine resin
(30) benzoguanamine/melamine resin
(31) urea resin

and the like

(32) polybutadiene
(33) 1,2-polybutadiene
(34) polyisoprene
(35) styrene/butadiene copolymer
(36) butadiene/acrylonitrile copolymer
(37) ethylene/propylene copolymer
(38) silicone rubber
(39) epichlorohydrin rubber
(40) acrylic rubber

(41) natural rubber
(42) chlororubber paint
(43) polyester resin paint
(44) urethane resin paint
(45) epoxy resin paint
(46) acrylic resin paint
(47) vinyl resin paint
(48) aminoalkyd resin paint
(49) alkyd resin paint
(50) nitrocellulose resin paint
(51) oil paint
(52) wax
(53) lubricating oil

As the thermoplastic resin, a polyolefin (e.g., polyethylene, polypropylene) and an engineering resin (e.g., polyamide, polyester, polycarbonate) are preferable, a polyethylene is more preferable and a linear low-density polyethylene (LLDPE) is further preferable.

The melt flow rate (MFR) at temperature 190°C and load 21.18N of the polyethylene is preferably 0.01 - 40 g/10 min, more preferably 0.1 - 20 g/10 min, further preferably 1.0 - 10 g/10 min. When the MFR is less than 0.01 g/10 min, processability may be degraded and when it is higher than 50 g/10 min, impact resistance and tensile strength may decrease. The above-mentioned MFR can be measured according to JIS K6922-2.

Examples of the polyolefin include one obtained by radical polymerization, and one produced by polymerization using a catalyst containing a metal of group IVb, Vb, VIb or VIII in the periodic table. Examples of the aforementioned catalyst include a metal complex having one or more ligands (e.g., oxide, halogen compound, alcoholate, ester, aryl, each of which is coordinated by $\pi$ or $\sigma$ bond). The aforementioned metal complex may be used as it is, or may be carried on a carrier such as magnesium chloride, titanium chloride, alumina, silicon oxide and the like. As the catalyst, Ziegler-Natta catalyst, TNZ catalyst, metallocene catalyst, and Phillips catalyst are preferable.

Polyamide as the engineering resin may be any as long as it has an amide bond in the polymer chain, and melted by heating. The polyamide may be, for example, one produced by any method such as condensation reaction of diamines and dicarboxylic acids, condensation reaction of aminocarboxylic acids, ring opening polymerization of lactams, and the like. Representative examples of polyamide include nylon 66, nylon 69, nylon 610, nylon 612, poly-bis(p-aminocyclohexyl)methanedodecamide, nylon 46, nylon 6, nylon 12, nylon 66/6, and nylon 6/12.

Polyester as the engineering resin may be any as long as it has an ester bond in the polymer chain, and melted by heating. Examples of the polyester include those obtained by polycondensation of dicarboxylic acids and dihydroxy compounds, and the like. Polyester may be any of a homopolymer and a copolymer. Representative examples of polyester include poly(ethylene terephthalate) and poly(butylene terephthalate).

Polycarbonate as the engineering resin may be any as long as it has a carbonate bond in the polymer chain, and melted by heating. Examples of the polycarbonate include those obtained by reacting an aromatic hydroxy compound, or an aromatic hydroxy compound and a small amount of a polyhydroxy compound with a carbonate precursor such as phosgene and diphenyl carbonate in the presence of a solvent, an acid acceptor and a molecular weight modifier. Polycarbonate may be any of a homopolymer and a copolymer, and may be any of a linear and a branched chain.

The total amount of a mixture containing compound (1) and at least two kinds of compounds (2) in the organic material composition is preferably 0.01 - 5 parts by weight, more preferably 0.03 - 3 parts by weight, further preferably 0.05 - 1 part by weight, per 100 parts by weight of the organic material. When the total amount is less than 0.01 part by weight, stabilization of an organic material is not necessarily sufficient and, when it exceeds 5 parts by weight, improvement of stabilization comparable thereto cannot be achieved, and is economically disadvantageous.

A method of mixing the phosphite composition of the present invention or each component thereof (hereinafter to be abbreviated as "the phosphite composition etc. of the present invention") with an organic material is not particularly limited, and known methods and apparatuses can be used.

When the organic material is a solid polymer, (1) the phosphite composition etc. of the present invention may be directly dry blended with the solid polymer, (2) a small amount of a solid polymer and the phosphite composition etc. of the present invention are first kneaded to form a master batch, and then the master batch and a solid polymer may be dry blended. When the organic material is a liquid polymer, a solution or dispersion of the phosphite composition etc. of the present invention may be added to a polymer solution during polymerization or after polymerization.

When the organic material is a liquid such as lubricating oil and the like, (1) the phosphite composition etc. of the present invention may be directly added to a liquid organic material, (2) the phosphite composition etc. of the present invention is dissolved or dispersed in a solvent to prepare a solution or dispersion, and the obtained solution or dispersion may be added to the liquid organic material.

[Examples]

The present invention is explained in more detail in the following by referring to Examples, which do not limit the present invention. It is also possible to carry out the present invention by making appropriate modifications within the range that can conform to the above and the following gist, all of which are encompassed in the technical scope of the present invention

The "part" described in the following Examples and the like means "part by weight".

Stabilizer

The stabilizers used in the following Examples and Comparative Examples are as described below.

"Sumilizer (registered trade mark) GP" (6-[3-(3-t-butyl-4-hydroxy-5-methylphenyl)propoxy]-2,4,8,10-tetra-t-butyldibenzo[d,f][1,3,2]dioxaphosphepin) manufactured by Sumitomo Chemical Company, Limited

"Weston (registered trade mark) 705" manufactured by Addivant

"Irgafos (registered trade mark) 168" (tris(2,4-di-t-butylphenyl)phosphite) manufactured by BASF

"TNPP" (tris(nonylphenyl)phosphite) manufactured by Addivant

"Irganox (registered trade mark) 1076" (octadecyl 3-(3,5-di-t-butyl-4-hydroxyphenyl)propionate) manufactured by BASF

Analysis of Weston (registered trade mark) 705

A liquid chromatography (LC) analysis of Weston (registered trade mark) 705 was performed. The analysis conditions are as described below.
apparatus: Shimadzu Corporation "LC-20A"
column: SUMIPAXODSA-2126 mm×150 mm (particle size: 5 pm)
solvent for sample preparation: chloroform:methanol (volume ratio=1:1)
mobile phase

solution A: 5 mM aqueous ammonium acetate solution
solution B: methanol solution of 5 mM ammonium acetate elution conditions
solution B concentration: 80% by volume→(1% by volume/min)→100% by volume (30 min)

flow rate: 1.0 mL/min
column temperature: 40°C
detection wavelength: 280 nm

In the LC analysis, 3 peaks were detected at retention time (R.T.)=31.2 min, 38.5 min and 50.3 min as chromatography retention time. The first peak (32.4 area%) corresponds to tris(4-t-pentylphenyl)phosphite, the next peak (49.9 area%) corresponds to bis(4-t-pentylphenyl)-2,4-di-t-pentylphenylphosphite, and the final peak (17.7 area%) corresponds to bis(2,4-di-t-pentylphenyl)-4-t-pentylphenylphosphite. Weston (registered trade mark) 705 is a liquid mixture of these.

Example 1

(1) Production of organic material composition (pellet)

To a powder (100 parts) of a linear low-density polyethylene ("FS150" manufactured by Sumitomo Chemical Company, Limited, melt flow rate (MFR) at temperature 190°C and load 21.18N: 1.0 g/10 min) were added Sumilizer (registered trade mark) GP (0.02 parts) and Weston (registered trade mark) 705 (0.18 parts), and calcium stearate (0.05 parts) as stabilizers, and the mixture was dry blended. Then, the obtained blend was granulated using a 30 mmφ single screw extruder at 190°C to give pellets. The obtained pellets were divided into two for the measurement of the below-mentioned haze and calculation of the MFR ratio.

(2) Measurement of haze

The obtained pellets were pressed by a pressing machine at 200°C to prepare a 100 pm thick film. The film was measured for haze (%) by a haze meter "HZ-V3" manufactured by Suga Test Instruments Co., Ltd. The results are shown in Table 1.

(3) Calculation of melt flow rate (MFR) ratio

The obtained pellets were placed in the single screw extruder again, and an extrusion operation was repeated 5 times at 280°. The MFR (g/10 min) of the pellets before the extrusion operation at 280°C and the pellets after the extrusion operation 5 times was measured by "melt indexer L246-3537" manufactured by Technol Seven Co., Ltd. under the conditions of temperature in cylinder 230°C, dwell time 5 min, load 21.18N (2.16 kg), and the MFR ratio was calculated by the following formula:

MFR ratio =(MFR of pellets after extrusion operation 5 times at 280°C)/(MFR of pellets before extrusion operation at 280°C)

The results are shown in Table 1. It is known that an extrusion operation of a linear low-density polyethylene causes progress of crosslinking and degradation, and the degradation can be observed as a decrease in MFR. Therefore, when MFR is maintained without a decrease (i.e., MFR ratio is close to 1) even when the extrusion operation is repeated, it means that crosslinking of a linear low-density polyethylene is suppressed and that the processing stability of the linear low-density polyethylene composition is superior.

<u>Examples 2 - 6 and Comparative Examples 1 - 6</u>

An operation similar to that of Example 1 was performed except that the kind and amount of the stabilizer were changed as shown in Table 1. The results of the haze and MFR ratio are shown in Table 1.

Table 1

| | stabilizer | | proportion (wt%) of Sumilizer GP in total stabilizer | haze (%) | MFR ratio |
|---|---|---|---|---|---|
| Example 1 | Sumilizer GP 0.02 parts | Weston 705 0.18 parts | 10 | 15.2 | 0.94 |
| Example 2 | Sumilizer GP 0.03 parts | Weston 705 0.17 parts | 15 | 15.2 | 0.95 |
| Example 3 | Sumilizer GP 0.05 parts | Weston 705 0.15 parts | 25 | 15.7 | 0.96 |
| Example 4 | Sumilizer GP 0.07 parts | Weston 705 0.13 parts | 35 | 16.0 | 0.95 |
| Example 5 | Sumilizer GP 0.1 parts | Weston 705 0.1 parts | 50 | 15.7 | 0.95 |
| Example 6 | Sumilizer GP 0.15 parts | Weston 705 0.05 parts | 75 | 14.5 | 0.96 |
| Comparative Example 1 | Sumilizer GP 0.2 parts | - | 100 | 17.2 | 0.97 |
| Comparative Example 2 | Sumilizer GP 0.1 parts | Irgafos 168 0.1 parts | 50 | 22.5 | 0.94 |
| Comparative Example 3 | Weston 705 0.2 parts | - | 0 | 17.2 | 0.57 |
| Comparative Example 4 | Sumilizer GP 0.1 parts | TNPP 0.1 parts | 50 | 17.4 | 0.95 |
| Comparative Example 5 | - | - | 0 | 16.7 | 0.30 |

(continued)

| | stabilizer | | proportion (wt%) of Sumilizer GP in total stabilizer | haze (%) | MFR ratio |
|---|---|---|---|---|---|
| Comparative Example 6 | Irganox 1076 0.1 parts | Irgafos 168 0.1 parts | 0 | 18.5 | 0.76 |
| (Note) Sumilizer, Weston, Irganox and Irgafos are all registered trade marks. | | | | | |

Examples 1 - 6 using Sumilizer (registered trade mark) GP as compound (1) and Weston (registered trade mark) 705 as a mixture containing at least two kinds of compounds (2) in combination showed low haze and good transparency as compared to Comparative Example 1 using Sumilizer (registered trade mark) GP alone and Comparative Example 3 using Weston (registered trade mark) 705 alone. In addition, Examples 1 - 6 showed high MFR ratio and good processing stability as compared to Comparative Example 3 using Weston (registered trade mark) 705 alone.

Examples 1 - 6 showed low haze and good transparency as compared to Comparative Examples 2 and 4 using Sumilizer (registered trade mark) GP as compound (1) and Irgafos (registered trade mark) 168 or TNPP as one kind of compounds (2) in combination.

Examples 1 - 6 showed good transparency (haze) and processing stability (MFR ratio) as compared to Comparative Example 5 without using a stabilizer, and Comparative Example 6 using Irganox (registered trade mark) 1076, which is not compound (1), and Irgafos (registered trade mark) 168 as one kind of compounds (2) in combination. In addition, a comparison of the haze of Examples 1 - 6 and Comparative Example 5 reveals that the use of Sumilizer (registered trade mark) GP as compound (1) and Weston (registered trade mark) 705 as a mixture containing at least two kinds of compounds (2) in combination resulted in the improvement of transparency rather than a decrease thereof even though these stabilizers were used.

[Industrial Applicability]

The phosphite composition of the present invention can improve processing stability of organic material compositions and can suppress decrease in the transparency of organic material compositions as compared to conventional stabilizers. Therefore, it is useful as a stabilizer for organic materials.

This application is based on a patent application No. 2015-150083 filed in Japan, the contents of which are incorporated in full herein.

## Claims

**1.** A composition comprising a compound represented by the formula (1):

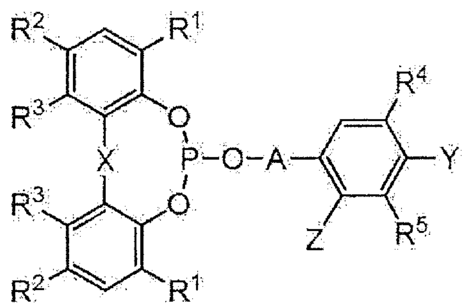

(1)

in the formula (1),

$R^1$, $R^2$, $R^4$ and $R^5$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a $C_{6-14}$ aryl group,
$R^3$ is a hydrogen atom or a $C_{1-8}$ alkyl group,
X is a single bond, a sulfur atom or a $-CHR^6-$ group

wherein $R^6$ is a hydrogen atom, a $C_{1-8}$ alkyl group or a $C_{5-8}$ cycloalkyl group,

A is a $C_{2-8}$ alkylene group or a *-$COR^7$- group wherein $R^7$ is a single bond or a $C_{1-8}$ alkylene group, and * shows binding to the oxygen atom side, and

one of Y and Z is a hydroxy group, a $C_{1-8}$ alkoxy group or a $C_{7-12}$ aralkyloxy group and the other is a hydrogen atom or a $C_{1-8}$ alkyl group, and

a mixture of at least two kinds of compounds represented by the formula (2):

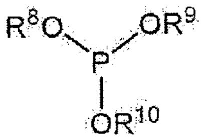 (2)

in the formula (2), $R^8$ - $R^{10}$ are each independently a $C_{6-18}$ aryl group substituted by at least one $C_{1-18}$ alkyl group.

**2.** The composition according to claim 1 wherein $R^8$ - $R^{10}$ are each independently a group represented by the formula (3):

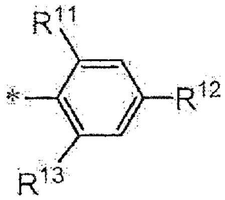 (3)

in the formula (3),

$R^{11}$ - $R^{13}$ are each independently a hydrogen atom or a $C_{1-6}$ alkyl group, provided that at least one of $R^{11}$ - $R^{13}$ is not a hydrogen atom, and

* shows binding to the oxygen atom side.

**3.** The composition according to claim 1 wherein the mixture comprises at least two kinds selected from the group consisting of compounds represented by any of the formula (2a) - the formula (2d):

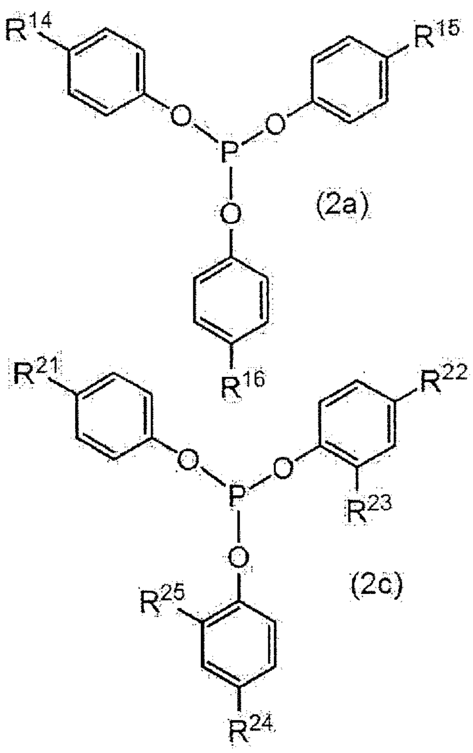
(2a) (2c)

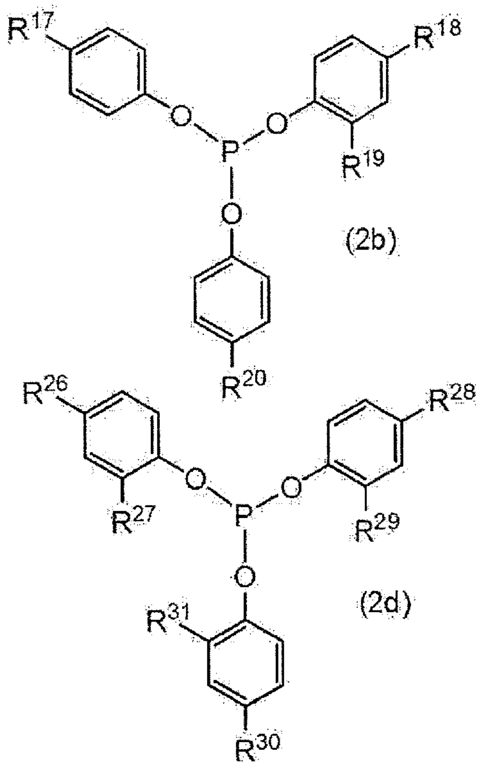
(2b) (2d)

in the formula (2a) - the formula (2d), $R^{14}$ - $R^{31}$ are each independently a t-butyl group or a t-pentyl group.

4. The composition according to claim 1 wherein the mixture comprises at least two selected from the group consisting of tris(4-t-pentylphenyl)phosphite, bis(4-t-pentylphenyl)-2,4-dit-pentylphenylphosphite, bis(2,4-di-t-pentylphenyl)-4-t-pentylphenylphosphite and tris(2,4-di-t-pentylphenyl)phosphite, or at least two selected from the group consisting of tris(4-t-butylphenyl)phosphite, bis(4-t-butylphenyl)-2,4-di-t-butylphenylphosphite, bis(2,4-di-t-butylphenyl)-4-t-butylphenylphosphite and tris(2,4-di-t-butylphenyl)phosphite.

5. The composition according to claim 1 wherein the mixture comprises tris(4-t-pentylphenyl)phosphite, bis(4-t-pentylphenyl)-2,4-di-t-pentylphenylphosphite and bis(2,4-di-t-pentylphenyl)-4-t-pentylphenylphosphite.

6. A stabilizer for an organic material, the stabilizer comprising the composition according to any one of claims 1 to 5.

7. The stabilizer according to claim 6, wherein the organic material is a thermoplastic resin.

8. The stabilizer according to claim 7, wherein the thermoplastic resin is a polyolefin or an engineering resin.

9. A method of stabilizing an organic material, the method comprising adding the composition according to any one of claims 1 to 5 to the organic material.

10. The method according to claim 9, wherein the organic material is a thermoplastic resin.

11. The method according to claim 10, wherein the thermoplastic resin is a polyolefin or an engineering resin.

12. A stabilized organic material composition comprising an organic material and the composition according to any one of claims 1 to 5.

13. The composition according to claim 12, wherein the organic material is a thermoplastic resin.

14. The composition according to claim 13, wherein the thermoplastic resin is a polyolefin or an engineering resin.

## INTERNATIONAL SEARCH REPORT

International application No. PCT/JP2016/071710

A. CLASSIFICATION OF SUBJECT MATTER
*C09K15/32*(2006.01)i, *C08K5/524*(2006.01)i, *C08L101/00*(2006.01)i

According to International Patent Classification (IPC) or to both national classification and IPC

B. FIELDS SEARCHED

Minimum documentation searched (classification system followed by classification symbols)
C09K15/32, C08K5/524, C08L101/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 2005-232342 A (Sumitomo Chemical Co., Ltd.), 02 September 2005 (02.09.2005), claims 1 to 3; paragraphs [0012] to [0017]; examples & US 2005/0187319 A1 claims 1 to 2; paragraphs [0046] to [0070]; examples & DE 102005007564 A & KR 10-2006-0042993 A & CN 1670067 A & TW 200535139 A | 1-14 |
| Y | JP 2013-14751 A (Japan Polyethylene Corp.), 24 January 2013 (24.01.2013), claims 1 to 8; paragraphs [0028] to [0043]; examples (Family: none) | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>30 August 2016 (30.08.16) | Date of mailing of the international search report<br>06 September 2016 (06.09.16) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2016/071710

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-540195 A (Dow Global Technologies L.L.C.), 31 October 2013 (31.10.2013), claims 1 to 17; paragraphs [0041] to [0042]; examples & US 2013/0225738 A1 claims 1 to 17; paragraphs [0041] to [00042]; examples & WO 2012/054395 A1 & EP 2499196 A1 & CA 2779491 A & CN 102656229 A & MX 2012007028 A & SG 182705 A & KR 10-2013-0117639 A | 1-14 |
| Y | JP 2013-508507 A (Chemtura Corp.), 07 March 2013 (07.03.2013), claims 1 to 17; paragraphs [0030] to [0059] & US 2010/0197837 A1 claims 1 to 23; paragraphs [0032] to [0062] & WO 2011/049728 A1 & EP 2491078 A1 & CA 2777020 A & CN 102712785 A & KR 10-2009-0031352 A & RU 2012107451 A | 1-14 |
| Y | JP 2013-500271 A (Chemtura Corp.), 07 January 2013 (07.01.2013), claims 1 to 19; paragraphs [0002] to [0010] & US 2011/0028616 A1 claims 1 to 19; paragraphs [0002] to [0010] & WO 2011/014477 A1 & EP 2459576 A1 & TW 201109343 A & CA 2764183 A & CN 102471356 A & KR 10-2012-0052257 A & RU 2012107492 A | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10273494 A
- WO 2007149143 A
- US 4325853 B
- US 4338244 A
- US 5175312 A
- US 5216053 A
- US 5252643 A
- US 4316611 A
- DE 4316622 A
- US 4316876 A
- EP 589839 A
- EP 591102 A
- JP 61063686 A
- JP 6329830 A
- JP 7090270 A
- JP 7278164 A
- JP 2015150083 A